# EUROPÄISCHE PATENTSCHRIFT

(11) **EP 3 991 236 B1**
(45) Veröffentlichungstag und Bekanntmachung des Hinweises auf die Patenterteilung: **23.09.2026**
(21) Anmeldenummer: 20728717.8
(22) Anmeldetag: 26.05.2020
(51) Int. Cl.: H01M 50/20, H01M 10/613, H01M 10/6554, H01M 10/6556

(54) **UNTERSCHALE FÜR EIN BATTERIEGEHÄUSE MIT EINEM AUS TRENNWANDSEGMENTEN AUFGEBAUTEN GEFACHE UND TRAKTIONSBATTERIE FÜR EIN KRAFTFAHRZEUG**
LOWER SHELL FOR A BATTERY HOUSING HAVING A DIVIDER MADE UP OF PARTITION-WALL SEGMENTS, AND TRACTION BATTERY FOR A MOTOR VEHICLE
COQUE INFÉRIEURE DESTINÉE À UN BOÎTIER DE BATTERIE COMPORTANT UN CASIER ASSEMBLÉ À PARTIR DE SEGMENTS DE PAROI DE SÉPARATION ET BATTERIE DE TRACTION DESTINÉE À UN VÉHICULE AUTOMOBILE

(30) Priorität: 27.06.2019 DE 102019209361
(43) Veröffentlichungstag der Anmeldung: 04.05.2022
(73) Patentinhaber: Audi AG, 85045 Ingolstadt (DE)
(72) Erfinder: GRABOWSKI, Michael, 85055 Ingolstadt (DE); OTTERBACH, Steffen, 74172 Neckarsulm (DE); HUMMEL, Marc, 74363 Güglingen (DE)
(86) Internationale Anmeldenummer: PCT/EP2020/064479
(87) Internationale Veröffentlichungsnummer: WO 2020/259937

(56) Entgegenhaltungen:
- DE-A1- 102016 209 853
- DE-A1- 102017 209 342
- WOLFGANG GOMOLL: "Batterie-Geheimnisse des Audi e-tron: Raus aus der Tesla-Falle", AUTOMOBIL-PRODUKTION, 1 April 2018 (2018-04-01), XP055719834, Retrieved from the Internet <URL:https://www.automobil-produktion.de/technik-produktion/fahrzeugtechnik/batterie-geheimnisse-des-audi-e-tron-raus-aus-der-tesla-falle-128.html> [retrieved on 20200803]

## Beschreibung

Die Erfindung betrifft gemäß Oberbegriff des Patentanspruchs 1 eine Unterschale für ein Batteriegehäuse einer Traktionsbatterie, mit einer Wanne und einem aus Trennwänden gebildeten Gefache, welches die Wanne in einzelne Fächer unterteilt. Die Erfindung betrifft ferner eine Traktionsbatterie für ein zumindest teilweise elektrisch angetriebenes Kraftfahrzeug.

Eine Unterschale (Unterkasten) betreffender Art ist ein unteres Batteriegehäuseteil einer Traktions- bzw. Fahrbatterie für ein zumindest teilweise elektrisch angetriebenes Kraftfahrzeug, wie insbesondere ein Elektroauto oder ein Hybridelektrokraftfahrzeug. Eine solche zumeist wannenartig ausgebildete Unterschale kann durch mehrere Trennwände in eine Vielzahl von Fächern, in denen die Batteriemodule oder dergleichen angeordnet werden, unterteilt sein. Die Gesamtheit der Trennwände kann auch als Gefach oder Gefache bezeichnet werden (nachfolgend wird der Begriff "Gefache" verwendet). Die Trennwände bzw. das Gefache dient nicht nur der Unterteilung, sondern auch der Versteifung sowie im Crashfall dem Lastabtrag.

Solche Unterschalen sind aus den Patentschriften DE 10 2016 113 481 A1, DE 10 2016 209 853 A1 und DE 10 2017 002 155 B4 bekannt.

Die nächstliegende DE 10 2017 209 342 A1 beschreibt eine Unterschale für ein Batteriegehäuse einer Traktionsbatterie, mit einer Wanne, die einen Boden und diesen Boden umgebende Seitenwände aufweist, und mit mehreren längs- und querverlaufenden Trennwänden, welche die Wanne in einzelne Fächer unterteilen, wobei diese Trennwände aus Faserkunststoffverbund-Profilen gebildet und an ihren Kreuzungsstellen mittels aus Aluminium gefertigter Knotenelemente miteinander verbunden sind.

Zum Stand der Technik wird außerdem noch auf den Fachartikel "Batterie-Geheimnisse des Audi e-tron: Raus aus der Tesla-Falle" von Wolfgang Gomoll hingewiesen.

Der Erfindung liegt die Aufgabe zugrunde, eine weitere Unterschale betreffender Art anzugeben, die stabil ist und die einfach herzustellen ist.

Die Aufgabe wird gelöst durch die erfindungsgemäße Unterschale mit den Merkmalen des Patentanspruchs 1. Mit dem nebengeordneten Patentanspruch erstreckt sich die Erfindung auch auf eine erfindungsgemäße Traktionsbatterie, insbesondere eine HV-Batterie, die eine erfindungsgemäße Unterschale aufweist. Weiterbildungen und Ausgestaltungen der Erfindung ergeben sich analog für beide Erfindungsgegenstände aus den abhängigen Patentansprüchen, der nachfolgenden Erfindungsbeschreibung und der Zeichnung.

Die erfindungsgemäße Unterschale ist dadurch gekennzeichnet, dass das Gefache aus mehreren, d. h. wenigstens zwei Trennwandsegmenten aufgebaut ist, wobei diese Trennwandsegmente als Leichtmetall-Druckgussbauteile ausgebildet und mittels Steckverbindungselementen gefügt sind. Mit anderen Worten: bei diesen Trennwandsegmenten handelt es sich um Leichtmetall-Druckgussbauteile, welche mittels Steckverbindungselementen gefügt sind.

Unter einem Trennwandsegment wird insbesondere ein Bauteil, d. h. ein Leichtmetall-Druckgussbauteil, verstanden, welches zum Aufbau einer Trennwand verwendet wird und (in axialer Richtung der Trennwand) einen Längenabschnitt dieser Trennwand bildet oder welches zum Aufbau mehrerer Trennwände, insbesondere kreuzweise angeordneter Trennwände, verwendet wird und Längenabschnitte dieser Trennwände bildet. Bevorzugt ist ein Trennwandsegment, insbesondere vollflächig, über die gesamte Trennwandhöhe ausgebildet.

Die als Leichtmetall-Druckgussbauteile ausgebildeten Trennwandsegmente können in großer Stückzahl günstig hergestellt und verbaut werden, wobei die Steckverbindungselemente eine relativ einfache Montage, d. h. ein relativ einfaches Einsetzen in die Wanne, und somit ein vergleichsweise einfaches Herstellen der Unterschale ermöglichen, wobei auf zusätzliche mechanische Fügeelemente (z. B. Schrauben, Stifte und dergleichen) und/oder auf thermische Fügeverfahren (z. B. Verschweißen oder Verlöten) verzichtet werden kann (gleichwohl können auch mechanische Fügeelemente und/oder thermische Fügeverfahren vorgesehen sein). Die Trennwandsegmente können in unterschiedlichen Ausführungen bereitgestellt werden und quasi einen Baukasten bilden, mit dem dann, insbesondere auch für verschiedene Batterietypen, die Gefache aufgebaut werden können. Ferner weisen die Druckguss-Trennwandsegmente bei vergleichsweise geringem Gewicht eine hohe Festigkeit bzw. Steifigkeit auf, was sich positiv auf die Stabilität und die Crasheigenschaften der Unterschale bzw. des Batteriegehäuses auswirkt.

Die Wanne weist bevorzugt einen Wannenboden und eine den Wannenboden umgebende Seitenwandung (mit mehreren Seitenwänden) auf. Die Seitenwandung kann als einstückiger Leichtmetall-Druckgussrahmen, der quasi einen Gefachrahmen bildet, vorzugsweise aus einer Aluminiumdruckgusslegierung oder Magnesiumdruckgusslegierung, ausgebildet sein, wie in der DE 10 2019 206 893 A1 beschrieben.

Bevorzugt ist vorgesehen, dass die als Leichtmetall-Druckgussbauteile ausgebildeten Trennwandsegmente mit Hilfe von Steckverbindungselementen untereinander und/oder mit der Seitenwandung der Wanne gefügt bzw. verbunden sind. Bevorzugt sind die Steckverbindungselemente vertikal bzw. senkrecht zum Wannenboden ausgerichtet, sodass die Trennwandsegmente beim Einsetzen von oben in die Wanne gefügt werden können, d. h., die Fügerichtung ist senkrecht zum Wannenboden. Die Trennwandsegmente sowie gegebenenfalls auch die Seitenwandung können mit integrierten Steckverbindungselementen ausgebildet sein. Optional kann ergänzend vorgesehen sein, dass die Trennwandsegmente untereinander, mit dem Wannenboden und/oder mit der Seitenwandung mittels mechanischer Fügelemente, Verklebung und/oder thermischer Fügung (z. B. Verschweißung oder Verlötung) gefügt sind, wobei ein verwendeter Klebstoff oder eine thermische Fügung zugleich auch als Dichtung fungieren kann.

Bevorzugt handelt es sich bei den Trennwandsegmenten um einstückige Leichtmetall-Druckgussbauteile, die aus einer Leichtmetalldruckgusslegierung, vorzugsweise einer Aluminiumdruckgusslegierung oder einer Magnesiumdruckgusslegierung, gebildet sind, insbesondere einschließlich der Steckverbindungselemente. D. h., die druckgegossenen Trennwandsegmente können mit angeformten bzw. bei der druckgießenden Herstellung mit angegossenen Steckverbindungselementen ausgebildet sein. Insbesondere die Fertigung aus einer Magnesiumdruckgusslegierung bietet hohe Gewichtseinsparungspotentiale.

Erfindungsgemäß sind die Steckverbindungselemente als ineinandergreifende Rundzapfen oder dergleichen und C-Nuten oder dergleichen ausgebildet, welche formschlüssige und insbesondere hinterschnittige Steckverbindungen bilden. Bevorzugt erstrecken sich diese Steckverbindungselemente vertikal bzw. senkrecht zum Wannenboden (s. o.). Solche hinterschnittigen Steckverbindungen verhindern ein Verrutschen der Trennwandsegmente, insbesondere auch im Crashfall. Die Rundzapfen und C-Nuten können (in vertikaler Richtung) über die gesamte Segment- bzw. Trennwandhöhe ausgebildet sein. Bevorzugt ist vorgesehen, dass zumindest einige Trennwandsegmente, insbesondere alle Trennwandsegmente, und gegebenenfalls auch die Seitenwandung mit solchen Steckverbindungselementen, vorzugsweise mit angeformten bzw. angegossenen Steckverbindungselementen, insbesondere in Gestalt von Rundzapfen oder dergleichen und C-Nuten oder dergleichen, ausgebildet sind.

Zumindest einige der Trennwandsegmente können als gerade, insbesondere profilartige (s. u.), Trennwandsegmente ausgebildet sein, insbesondere mit einem Rundzapfen an einem axialen Ende und mit einer C-Nut am anderen axialen Ende.

Bevorzugt sind zumindest einige der geraden Trennwandsegmente kreuzweise bzw. über Kreuz angeordnet und an den Kreuzungen bzw. Kreuzungsstellen durch sogenannte Verkämmung (miteinander) verbunden. Die betreffenden Trennwandsegmente sind hierzu an den Kreuzungsstellen mit komplementären Aussparungen bzw. Ausnehmungen ausgebildet, welche sich insbesondere jeweils über die halbe Segment- bzw. Trennwandhöhe erstrecken, durch welche ein verkämmungsartiges Ineinanderstecken ermöglicht ist. Die betreffenden Trennwandsegmente können an den Kreuzungsstellen lokal mit einem verbreiterten Restquerschnitt ausgebildet sein, um eine Querschnittsschwächung infolge der Aussparung zumindest teilweise zu kompensieren. Unter Restquerschnitt wird insbesondere der im Bereich einer Aussparung bzw. Ausnehmung (wodurch das Trennwandsegment an der betreffenden Stelle quasi einen reduzierten Querschnitt aufweist) noch vorhandene Trennwandquerschnitt verstanden.

Die über Kreuz angeordneten geraden Trennwandsegmente können an den Kreuzungsstellen bzw. -punkten zusätzlich verschraubt, verstiftet oder in sonstiger geeigneter Weise mittels mechanischer Fügeelemente gefügt sein. Insbesondere ist vorgesehen, dass an zumindest einigen der Kreuzungsstellen die betreffenden Trennwandsegmente mittels Schraubverbindungen, Stiftverbindungen oder dergleichen am Wannenboden der Wanne befestigt sind. Die betreffenden Trennwandsegmente können hierzu mit fluchtenden Bohrungen ausgebildet sein. Selbiges gilt analog für fachwerkartige Trennwandsegmente (s. u.).

Bevorzugt sind zumindest einige der geraden Trennwandsegmente als Profildruckgussbauteile mit einem T-förmigen Querschnitt (insbesondere mit einem unteren Gurt und einem nach oben abragenden Steg) oder Doppel-T-förmigen Querschnitt (insbesondere mit einem unteren Gurt, einem oberen Gurt und einem Verbindungssteg) ausgebildet. Diese Profil-Trennwandsegmente weisen bei relativ geringem Gewicht eine besonders hohe Biegesteifigkeit und Crashstabilität auf. Außerdem ermöglichen die unteren Profilgurte eine großflächige Abstützung am Wannenboden, wodurch optional auch eine vergleichsweise großflächige Verklebung mit dem Wannenboden möglich ist. Selbiges gilt analog für fachwerkartige Trennwandsegmente (s. u.).

Zumindest einige der Trennwandsegmente können als fachwerkartige Trennwandsegmente ausgebildet sein. Hierunter wird insbesondere verstanden, dass ein solches, vorzugsweise einstückig gefertigtes, Trennwandsegment mehrere in unterschiedliche Richtungen verlaufende Abschnitte bzw. Längenabschnitte, insbesondere Profilabschnitte, aufweist, die bereits fachwerkartig oder leiterrahmenartig angeordnet sind, wobei die Abschnitte auch über Kreuz angeordnet sein können und wenigstens ein Fach (womit ein zumindest teilweise von Abschnitten bzw. Profilabschnitten umgebener Zwischenraum gemeint ist) bilden.

Die Erfindung wird nachfolgend anhand der Zeichnung näher erläutert. Die in den Figuren der Zeichnung gezeigten und/oder nachfolgend erläuterten Merkmale können, auch unabhängig von bestimmten Merkmalskombinationen, allgemeine Merkmale der Erfindung sein und die Erfindung entsprechend weiterbilden.
- Fig. 1: zeigt eine mit einem Gefach bzw. Gefache ausgebildete Unterschale für ein Batteriegehäuse einer Traktionsbatterie gemäß Stand der Technik.
- Fig. 2: zeigt eine erfindungsgemäße Ausführungsmöglichkeit eines Gefaches für eine Unterschale gemäß Fig. 1.
- Fig. 3: veranschaulicht die Verbindung eines Trennwandsegments mit der Seitenwandung.
- Fig. 4: veranschaulicht zwei gerade Trennwandsegmente, die mittels Verkämmung über Kreuz angeordnet werden.
- Fig. 5: zeigt mögliche Querschnittsgeometrien für Trennwandsegmente.
- Fig. 6: zeigt analog zur Fig. 2 eine andere erfindungsgemäße Ausführungsmöglichkeit eines Gefaches.
- Fig. 7: zeigt analog zur Fig. 2 eine weitere erfindungsgemäße Ausführungsmöglichkeit eines Gefaches.
- Fig. 8: zeigt schematisch eine weitere Ausführungsmöglichkeit für die Ausgestaltung und Anordnung von Trennwandsegmenten für ein Gefache.

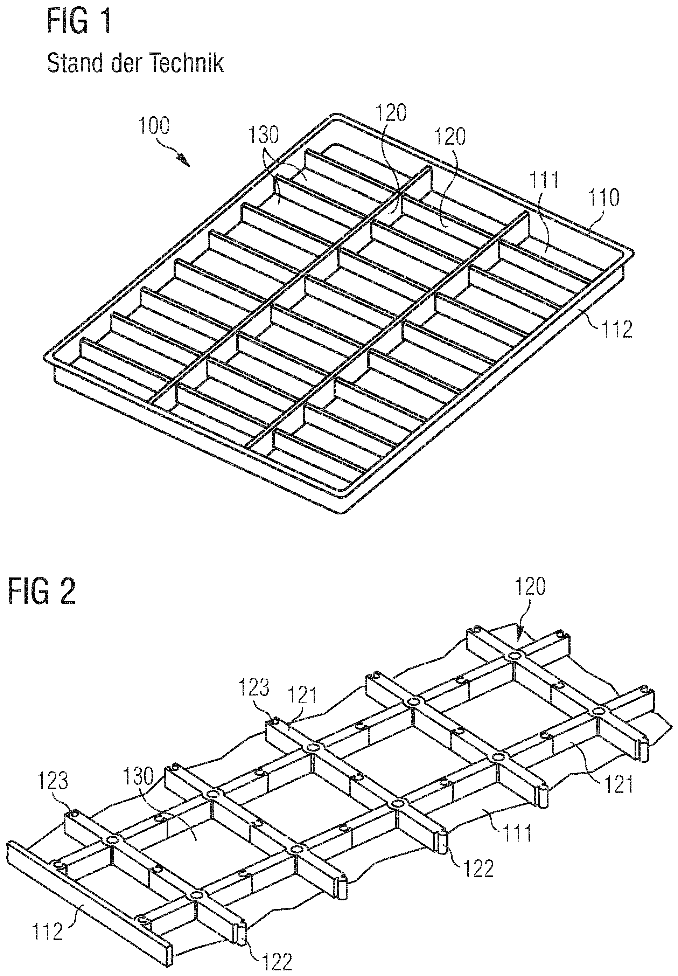

Die in Fig. 1 gezeigte Unterschale 100 weist eine Wanne bzw. einen wannenartigen Korpus 110 auf, welche mit einem Wanneboden 111 und einer den Wannenboden 111 umgebenden Seitenwandung 112 ausgebildet ist. Der durch den Wannenboden 111 und die Seitenwandung 112 gebildete Innenraum der Wanne 110 ist durch mehrere quer- und längsverlaufende Trennwände setzkastenartig in eine Vielzahl von Fächern 130 zur Aufnahme von Batteriemodulen unterteilt. Die vollflächigen Trennwände erstrecken sich jeweils von einer Seitenwand bis zur gegenüberliegenden Seitenwand der Seitenwandung 112 und bilden eine Trennwandstruktur 120, die auch als Gefach bzw. Gefache bezeichnet wird. Das aus den Trennwänden gebildete Gefache 120 dient ferner der Versteifung der Unterschale 100 bzw. der Wanne 110 sowie im Crashfall auch dem Lastabtrag. Die Unterschale 100 bildet zusammen mit einem nicht gezeigten Deckel (Oberschale) ein Batteriegehäuse für eine Traktions- bzw. Fahrbatterie.

Erfindungsgemäß ist vorgesehen, dass das Gefache 120 aus einer Vielzahl von Trennwandsegmenten 121 aufgebaut bzw. zusammengebaut ist, d. h., das Gefache 120 ist ein Zusammenbauteil (ZSB-Teil) aus einzelnen Trennwandsegmenten 121, wobei die Trennwandsegmente 121 mittels Steckverbindungselementen gefügt sind.

Fig. 2 zeigt eine Ausführungsmöglichkeit, bei welcher das Gefache 120 bzw. dessen Trennwände aus mehreren in Reihe bzw. hintereinander angeordneten geraden Trennwandsegmenten 121, die mittels Steckverbindungselementen 122 und 123 gefügt sind, aufgebaut ist. An den Kreuzungsstellen erfolgt die Verbindung der geraden Trennwandsegmente 121 durch Verkämmung, wie nachfolgend noch näher erläutert. Die Trennwandsegmente 121 sind hier als einstückige Leichtmetall-Druckgussbauteile mit angeformten Steckverbindungselementen 122, 123 ausgebildet.

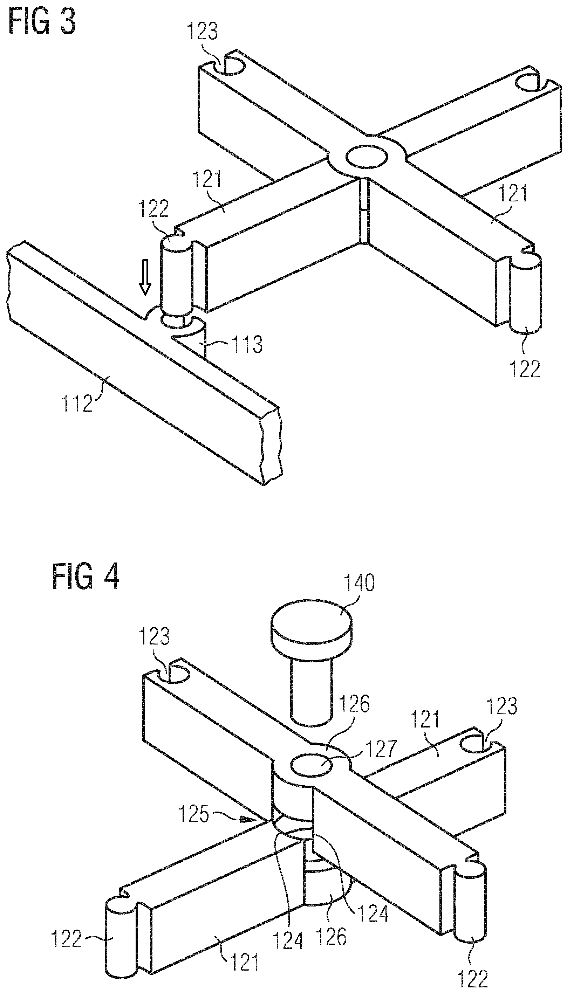

Bei den Steckverbindungselementen handelt es sich um Rundzapfen 122 und C-Nuten 123, die mit korrespondierenden bzw. komplementären Geometrien ausgebildet sind, sodass diese hinterschnittig bzw. verhakungsartig ineinandergreifen, wie u. a. aus Fig. 2 ersichtlich. An einem axialen Ende der Trennwandsegmente 121 ist jeweils ein Rundzapfen 122 und am anderen axialen Ende jeweils eine C-Nut 123 angeordnet, die sich über die gesamte Segment- bzw. Trennwand(segment)höhe erstrecken (siehe auch Fig. 3 und Fig. 4). Die Rundzapfen 123 ermöglichen beim Ineinanderstecken bzw. beim Einschieben in die C-Nut (dies ist beispielhaft in Fig. 3 durch den Pfeil veranschaulicht) einen verkantungs- bzw. verklemmungsfreien Eingriff und ermöglichen zudem einen geringen Winkelausgleich.

Die Trennwandsegmente 121 sind sowohl untereinander als auch mit der Seitenwandung 112 mittels der Steckverbindungselemente 122/123 gefügt bzw. verbunden. Die Seitenwandung 112 ist hierzu innenseitig an den betreffenden Stellen ebenfalls mit Steckverbindungselementen 113 ausgebildet, wie in Fig. 3 gezeigt. Anstelle der gezeigten C-Nut kann auch ein Rundzapfen vorgesehen sein. Bevorzugt ist die Seitenwandung 112 als Leichtmetall-Druckgussrahmen ausgebildet, wobei die rahmenseitigen Steckverbindungselemente 113 am Rahmen angegossen sein können.

Die geraden Trennwandsegmente 121 werden über Kreuz angeordnet und an den Kreuzungsstellen durch Verkämmung 125 verbunden, wie in Fig. 4 gezeigt. Durch die Verkämmung 125 werden die gekreuzten Trennwandsegmente 121 auch gegeneinander abgestützt, was sich positiv auf die Stabilität und die Crasheigenschaften der Unterschale 100 auswirkt. Die Trennwandsegmente 121 sind hierzu mit komplementären Aussparungen 124 ausgebildet, die das verkämmungsartige Ineinanderstecken ermöglichen, wobei sich die Aussparungen 124 jeweils über die halbe Segmenthöhe erstrecken. Ferner sind die Trennwandsegmente 121 im Bereich dieser Aussparungen 124 durch Querschnittsverbreiterungen 126 in Gestalt beidseitiger Ausbauchungen lokal mit einem verbreiterten Restquerschnitt ausgebildet. Die Aussparungen 124 und Querschnittsverbreiterungen 126 sind so ausgebildet, dass nach dem Ineinanderstecken der Trennwandsegmente 121 mittels Scharnier- bzw. Gelenkeffekt ein geringer Winkelausgleich zwischen den verkämmten Trennwandsegmenten 121 möglich ist, wodurch Fertigungstoleranzen ausgeglichen und Verzwängungen vermieden werden können.

Die über Kreuz angeordneten und verkämmten Trennwandsegmente 121 können an den Kreuzungsstellen auch gefügt werden, bspw. mit einer Schraube 140 oder dergleichen. Optional ist damit auch eine mechanische Befestigung der Trennwandsegmente 121 am Wannenboden 111 möglich. Die Trennwandsegmente 121 sind hierzu an den Kreuzungs- bzw. Verkämmungsstellen mit fluchtenden Bohrungen 127 ausgebildet. Bevorzugt werden die Aussparungen 124 und die Bohrungen 127 bei einer druckgießenden Herstellung der Trennwandsegmente 121 miterzeugt. Ferner können die Trennwandsegmente 121 mit dem Wannenboden 111 auch verklebt und/oder thermisch gefügt werden, wie oben bereits erwähnt.

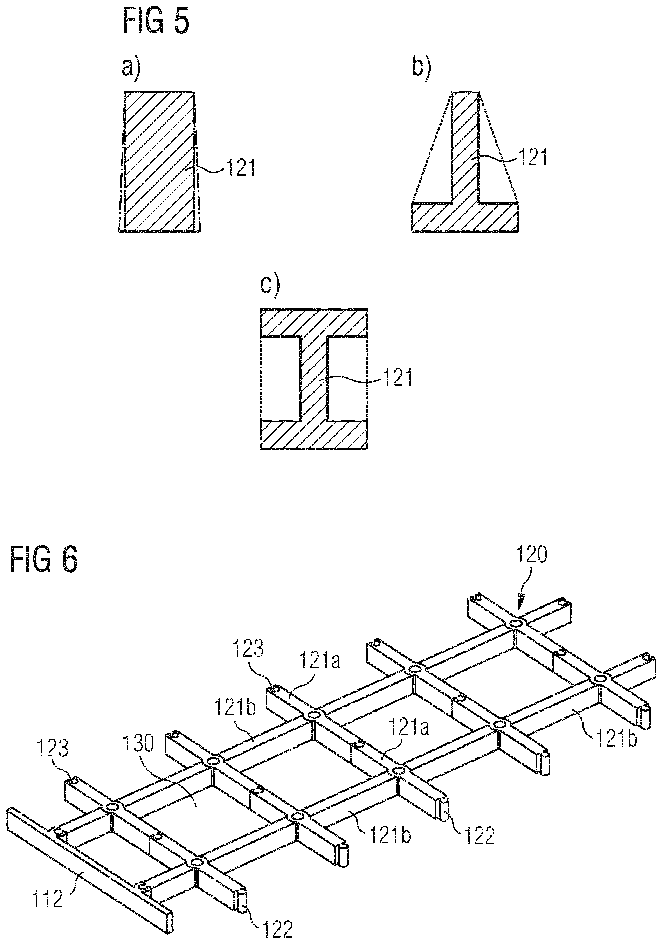

Die Trennwandsegmente 121, einschließlich der Steckverbindungselemente 122/123, sind insbesondere so gestaltet, dass diese durch Druckgießen, insbesondere im Hinblick auf die Entformbarkeit aus der Druckgießform, einfach und günstig hergestellt werden können. Besonders günstig ist ein rechteckiger Querschnitt, wie in Fig. 5a gezeigt. Zur besseren Entformung aus der Druckgießform können die Seitenflächen als Auszugsschrägen ausgebildet sein, wie mit strichpunktierten Linien angedeutet. Alternativ kann auch ein T-förmiger oder Doppel-T-förmiger Querschnitt vorgesehen sein, wie in den Fig. 5b und 5c gezeigt. Die Gurte können durch Verrippungen versteift sein, wie strichliniert angedeutet.

Die druckgießende Herstellung der Trennwandsegmente 121 ermöglicht eine hohe Funktionsintegration, da fast alle Elemente (insbesondere die Steckverbindungselemente 122/123, die Verkämmungsaussparungen 124, die Querschnittsverbreiterungen 126, die Bohrungen 127, und/oder die Versteifungsrippen an den Gurten) beim Druckgießen miterzeugt werden können.

Bei der in der Fig. 2 gezeigten Ausführungsmöglichkeit sind die Trennwandsegmente 121 also mittels ineinandergreifender Steckverbindungselemente 113/122/123, mittels Verkämmung 125 und mittels Verschraubung 140 (oder dergleichen) gefügt bzw. verbunden. Der Verbindungstechnikaufwand ist somit vergleichsweise gering. Optional kann auch eine Verklebung und/oder thermische Fügung vorgesehen sein, wie oben erläutert.

Fig. 6 zeigt eine Ausführungsmöglichkeit, bei der die querverlaufenden Trennwände des Gefaches 120 aus hintereinander angeordneten Trennwandsegmenten 121a aufgebaut sind, wohingegen die längsverlaufenden Trennwände aus durchgängigen Trennwandsegmenten 121b gebildet sind. Die Trennwandsegmente 121a, 121b sind als einstückige Leichtmetall-Druckgussbauteile mit angeformten Steckverbindungselementen 122, 123 ausgebildet.

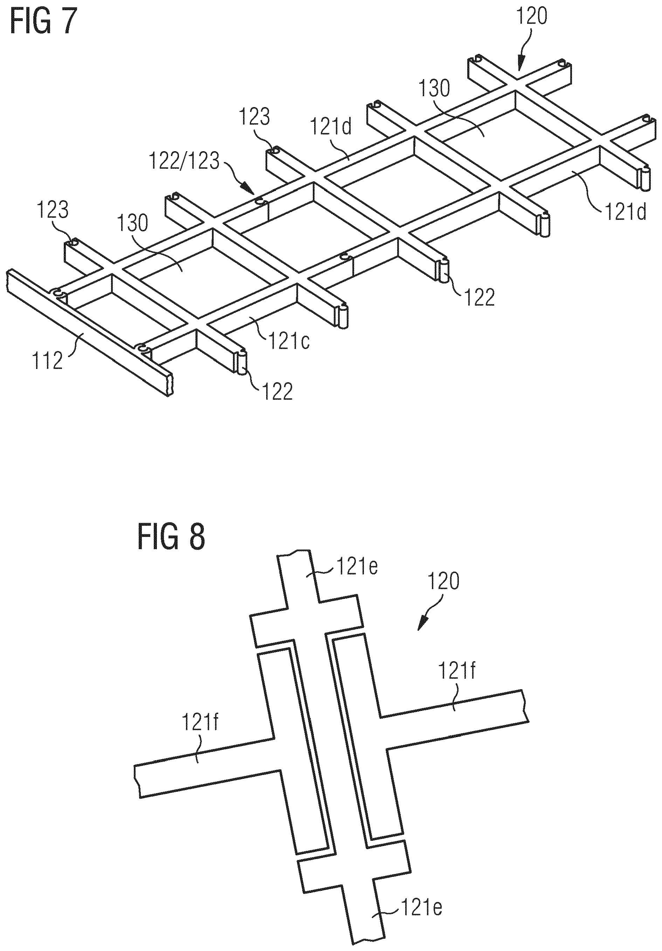

Fig. 7 zeigt eine Ausführungsmöglichkeit, bei der das Gefache 120 aus mehreren fachwerkartigen, bereits mit Fächern 130 ausgebildeten Trennwandsegmenten 121c und 121d aufgebaut ist. Auch hier sind die fachwerkartigen Trennwandsegmente 121c, 121d als einstückige Leichtmetall-Druckgussbauteile mit angeformten Steckverbindungselementen 122, 123 ausgebildet.

Fig. 8 veranschaulicht schematisch in einer Draufsicht eine andere Ausführungsmöglichkeit, bei der die Trennwandsegmente 121e und 121f ohne Verkämmung (d. h. verkämmungsfrei) untereinander sowie gegebenenfalls auch mit der Seitenwandung verrutschungssicher verbunden sind. Bei entsprechender Ausgestaltung der Steckverbindungselemente ist auch eine hinterschnittige Verbindung möglich. Optional kann auch hier eine Verschraubung (oder dergleichen), Verklebung und/oder thermische Fügung vorgesehen sein.

## Patentansprüche

1. Unterschale (100) für ein Batteriegehäuse einer Traktionsbatterie, mit einer Wanne (110) und einem aus Trennwänden gebildeten Gefache (120), welches die Wanne (110) in einzelne Fächer (130) unterteilt,
**dadurch gekennzeichnet, dass**
das Gefache (120) aus mehreren Trennwandsegmenten (121) aufgebaut ist, wobei die Trennwandsegmente (121) als Leichtmetall-Druckgussbauteile ausgebildet und mittels Steckverbindungselementen (113, 122, 123) gefügt sind, wobei die Steckverbindungselemente (113, 122, 123) als ineinandergreifende Rundzapfen und C-Nuten ausgebildet sind, die hinterschnittige Steckverbindungen bilden.

2. Unterschale (100) nach Anspruch 1,
**dadurch gekennzeichnet, dass**
die Rundzapfen (122) und C-Nuten (123) über die gesamte Segmenthöhe ausgebildet sind.

3. Unterschale (100) nach einem der vorausgehenden Ansprüche,
**dadurch gekennzeichnet, dass**
zumindest einige der Trennwandsegmente (121) als gerade Trennwandsegmente ausgebildet sind.

4. Unterschale (100) nach Anspruch 3,
**dadurch gekennzeichnet, dass**
zumindest einige der geraden Trennwandsegmente (121) über Kreuz angeordnet und an den Kreuzungsstellen durch Verkämmung (125) verbunden sind.

5. Unterschale (100) nach Anspruch 4,
**dadurch gekennzeichnet, dass**
die über Kreuz angeordneten geraden Trennwandsegmente (121) an den Kreuzungsstellen lokal mit einem verbreiterten Restquerschnitt (126) ausgebildet sind.

6. Unterschale (100) nach Anspruch 4 oder 5,
**dadurch gekennzeichnet, dass**
die über Kreuz angeordneten geraden Trennwandsegmente (121) an den Kreuzungsstellen zusätzlich verschraubt (140) sind.

7. Unterschale (100) nach einem der vorausgehenden Ansprüche,
**dadurch gekennzeichnet, dass**
zumindest einige der Trennwandsegmente (121) als fachwerkartige Trennwandsegmente (121c, 121d) ausgebildet sind.

8. Unterschale (100) nach einem der vorausgehenden Ansprüche,
**dadurch gekennzeichnet, dass**
die Trennwandsegmente (121) einstückig aus einer Leichtmetalldruckgusslegierung gebildet sind.

9. Unterschale (100) nach Anspruch 8,
**dadurch gekennzeichnet, dass**
die Trennwandsegmente (121) einschließlich der Steckverbindungselemente (122, 123) einstückig aus einer Leichtmetalldruckgusslegierung gebildet sind.

10. Unterschale (100) nach Anspruch 8 oder 9,
**dadurch gekennzeichnet, dass**
die Trennwandsegmente (121) einstückig aus einer Aluminiumdruckgusslegierung oder einer Magnesiumdruckgusslegierung gebildet sind.

11. Traktionsbatterie für ein zumindest teilweise elektrisch angetriebenes Kraftfahrzeug, mit einem Batteriegehäuse, in dem mehrere Batteriemodule angeordnet sind, wobei das Batteriegehäuse eine Unterschale (100) gemäß einem der vorausgehenden Ansprüche 1 bis 10 und einen damit verbundenen Deckel aufweist.

## Claims

1. Lower shell (100) for a battery housing of a traction battery with a tray (110) and a divider (120) which is formed from partition walls and subdivides the tray (110) into individual compartments (130),
**characterized in that**
the divider (120) is made up of a plurality of partition-wall segments (121), wherein the partition-wall segments (121) are in the form of light-metal die-cast components and are joined by means of plug-in connecting elements (113, 122, 123), wherein the plug-in connecting elements (113, 122, 123) are in the form of interengaging round pins and C-shaped grooves which form undercut plug-in connections.

2. Lower shell (100) according to claim 1,
**characterized in that**
the round pins (122) and C-shaped grooves (123) are formed over the entire segment height.

3. Lower shell (100) according to any one of the preceding claims,
**characterized in that**
at least some of the partition-wall segments (121) are in the form of straight partition-wall segments.

4. Lower shell (100) according to claim 3,
**characterized in that**
at least some of the straight partition-wall segments (121) are arranged crosswise and are connected at the crossing points by interlocking (125).

5. Lower shell (100) according to claim 4,
**characterized in that**
the straight partition-wall segments (121) arranged crosswise are locally formed with a widened residual cross-section (126) at the crossing points.

6. Lower shell (100) according to claim 4 or 5,
**characterized in that**
the straight partition-wall segments (121) arranged crosswise are additionally screwed together (140) at the crossing points.

7. Lower shell (100) according to any one of the preceding claims,
**characterized in that**
at least some of the partition-wall segments (121) are in the form of truss-like partition-wall segments (121c, 121d).

8. Lower shell (100) according to any one of the preceding claims,
**characterized in that**
the partition-wall segments (121) are formed in one piece from a light-metal die-casting alloy.

9. Lower shell (100) according to claim 8,
**characterized in that**
the partition-wall segments (121), including the plug-in connecting elements (122, 123), are formed in one piece from a light-metal die-casting alloy.

10. Lower shell (100) according to claim 8 or 9,
**characterized in that**
the partition-wall segments (121) are formed in one piece from an aluminium die-casting alloy or a magnesium die-casting alloy.

11. Traction battery for a motor vehicle driven at least partially electrically, having a battery housing in which a plurality of battery modules are arranged, wherein the battery housing has a lower shell (100) according to any one of the preceding claims 1 to 10 and a cover connected thereto.

## Revendications

1. Coque inférieure (100) pour un boîtier de batterie d'une batterie de traction, avec un bac (110) et un compartiment (120) formé de parois de séparation, lequel divise le bac (110) en compartiments individuels (130),
**caractérisée en ce que**
le compartiment (120) est constitué de plusieurs segments de paroi de séparation (121), dans laquelle les segments de paroi de séparation (121) sont conçus en tant que pièces moulées sous pression en métal léger et assemblés au moyen d'éléments à connexion enfichable (113, 122, 123), dans laquelle les éléments à connexion enfichable (113, 122, 123) sont conçus en tant que tenons ronds et rainures en C s'emboîtant les uns dans les autres, qui forment des connexions enfichables à contre-dépouille.

2. Coque inférieure (100) selon la revendication 1,
**caractérisée en ce que**
les tenons ronds (122) et rainures en C (123) s'étendent sur la hauteur de segment entière.

3. Coque inférieure (100) selon l'une quelconque des revendications précédentes,
**caractérisée en ce que**
au moins certains des segments de paroi de séparation (121) sont conçus en tant que segments de paroi de séparation droits.

4. Coque inférieure (100) selon la revendication 3,
**caractérisée en ce que**
au moins certains des segments de paroi de séparation droits (121) sont disposés en croix et connectés aux points d'intersection par emboîtement (125).

5. Coque inférieure (100) selon la revendication 4,
**caractérisée en ce que**
les segments de paroi de séparation droits (121) disposés en croix présentent localement aux points d'intersection une section transversale résiduelle élargie (126).

6. Coque inférieure (100) selon la revendication 4 ou 5,
**caractérisée en ce que**
les segments de paroi de séparation droits (121) disposés en croix sont en outre vissés (140) aux points d'intersection.

7. Coque inférieure (100) selon l'une quelconque des revendications précédentes,
**caractérisée en ce que**
au moins certains des segments de paroi de séparation (121) sont conçus en tant que segments de paroi de séparation en treillis (121c, 121d).

8. Coque inférieure (100) selon l'une quelconque des revendications précédentes,
**caractérisée en ce que**
les segments de paroi de séparation (121) sont formés d'un seul tenant à partir d'un alliage léger moulé sous pression.

9. Coque inférieure (100) selon la revendication 8,
**caractérisée en ce que**
les segments de paroi de séparation (121), y compris les éléments à connexion enfichable (122, 123), sont formés d'un seul tenant à partir d'un alliage de métal léger moulé sous pression.

10. Coque inférieure (100) selon la revendication 8 ou 9,
**caractérisée en ce que**
les segments de paroi de séparation (121) sont formés d'un seul tenant à partir d'un alliage d'aluminium moulé sous pression ou d'un alliage de magnésium moulé sous pression.

11. Batterie de traction pour un véhicule à moteur à propulsion au moins partiellement électrique, avec un boîtier de batterie dans lequel plusieurs modules de batterie sont disposés, dans laquelle le boîtier de batterie présente une coque inférieure (100) selon l'une quelconque des revendications précédentes 1 à 10 et un couvercle connecté à celle-ci.
